# EUROPÄISCHE PATENTSCHRIFT

(11) **EP 4 189 226 B1**
(45) Veröffentlichungstag und Bekanntmachung des Hinweises auf die Patenterteilung: **02.09.2026**
(21) Anmeldenummer: 21742384.7
(22) Anmeldetag: 12.07.2021
(51) Int. Cl.: F02D 19/02, F02D 41/00, F02D 41/14

(54) **ERMITTELN EINER BRENNGASZUSAMMENSETZUNG**
DETERMINING THE COMPOSITION OF A COMBUSTION GAS
DÉTERMINATION DE LA COMPOSITION D'UN GAZ DE COMBUSTION

(30) Priorität: 29.07.2020 DE 102020119960
(43) Veröffentlichungstag der Anmeldung: 07.06.2023
(73) Patentinhaber: MAN Truck & Bus SE, 80995 München (DE)
(72) Erfinder: KRAUSS, Heiko, 80995 München (DE); GEHRMANN, Torsten, 80995 München (DE)
(74) Vertreter: v. Bezold & Partner Patentanwälte - PartG mbB
(86) Internationale Anmeldenummer: PCT/EP2021/069295
(87) Internationale Veröffentlichungsnummer: WO 2022/023004

(56) Entgegenhaltungen:
- EP-A1- 1 467 149
- WO-A1-2013/000030
- WO-A1-2013/093598
- WO-A1-2015/104772
- DE-A1- 102004 060 893

## Beschreibung

Die Erfindung betrifft ein Verfahren zum Ermitteln einer Brenngaszusammensetzung für eine Brennkraftmaschine. Die Erfindung betrifft zudem eine Brennkraftmaschine.

Eine große Herausforderung für insbesondere stationäre Gasmotoren besteht darin, auf Basis verschiedenster Kraftstoffqualitäten eine saubere, effiziente und flexible Energiebereitstellung zu realisieren. Zunächst ist die motorische Verbrennung von Erdgas aus dem Erdgasnetz zu nennen. Es wird hierbei zwischen "Erdgas H/High" und "Erdgas L/Low" differenziert. Erdgas High weist beträchtlich höhere Methankonzentrationen auf und ist wesentlich zündwilliger als Erdgas Low. Zukünftig wird zudem angestrebt, durch das Power-to-Gas-Verfahren, den Wasserstoffanteil im Erdgas zu erhöhen, wodurch die Gasqualitäten noch weiter schwanken. Ebenfalls von großer Wichtigkeit ist die Energiebereitstellung aus Biogas, das sich je nach Beschickung des Fermenters hinsichtlich des Methan- und Kohlenstoffdioxidgehalts unterscheidet. Eine weitere Quelle motorischer Verbrennungsgase stellt das Holzgas dar, das sich zum größten Teil aus Kohlenstoffdioxid, Methan und Wasserstoff zusammensetzt. Ebenso von Bedeutung ist das aus Industrieprozessen aufbereitete Synthesegas, zum Beispiel aus Kunststoffabfällen, das sich im Sinne einer optimierten Ressourcennutzung für die Strom- und Wärmeerzeugung durch Verbrennungsmotoren eignet. Durch die teilweise stark fluktuierende Gaszusammensetzung herrschen große Differenzen bezüglich der Verbrennungseigenschaften. Ohne Kenntnis der aktuellen Gasqualität sind kaum motorische Anpassungen möglich. Dies führt schließlich bei hohen Inertgasanteilen zu einem direkten Wirkungsgradverlust infolge einer hohen Wärmeabfuhr und ungünstiger Verbrennungslage. Im Gegensatz dazu sorgt die Klopfregelung bei sehr zündwilligen Gasen dafür, dass durch Anpassung des Zündwinkels Wirkungsgradnachteile entstehen. Aus diesem Grund kann bei Gasmotoren, die mit unterschiedlichen Brenngasqualitäten betrieben werden, angestrebt werden, eine Brenngaszusammensetzungserkennung bzw. eine Gasqualitätserkennung zu implementieren und in den motorischen Regelgreis zu integrieren.

Die DE 10 2017 218 746 A1 offenbart ein Verfahren zum Betreiben einer Brennkraftmaschine, wobei einem Brennraum der Brennkraftmaschine ein Brenngas-Verbrennungsluft-Gemisch zur Verbrennung zugeführt wird. Wenigstens ein für eine Reaktivität des Brenngases charakteristischer Gasparameter wird erfasst. Der wenigstens eine charakteristische Gasparameter wird als ein Brennraumdruckwert oder ein Brennraumdruckverlauf erfasst. Die Messeinrichtung ist als Brennraumdrucksensor ausgebildet. Alternativ ist es möglich, dass der wenigstens eine charakteristische Gasparameter stromaufwärts des Brennraums durch eine Gasanalyse durch Gaschromatographie bestimmt wird.

Die DE 10 2017 000 860 A1 offenbart Systeme, Verfahren und Vorrichtungen zum Steuern des Betriebs eines Motors, der aufgebaut ist, um gasförmigen Kraftstoff zu verbrennen einschließlich einer Schätzung von von der Erdgasqualität abhängigen Schlüsselparametern. Die Erdgasqualitätsparameter werden aus den Erdgaseigenschaften geschätzt, die ausverschiedenen erfassten, dem Motor zugeordneten Parametern erhalten wurden. Die Gasqualitätsparameter sind ein Parameter G (manchmal als Lambda-Parameter G bezeichnet), ein einem gasförmigen Kraftstoff zugeordnetes spezifisches Gewicht, eine einem gasförmigen Kraftstoff zugeordnete Methanzahl, ein einem gasförmigen Kraftstoff zugeordneter unterer Heizwert und ein einem gasförmigen Kraftstoff zugeordneter Wobbe-Index.

Die EP 1 467 149 A1 offenbart ein Verfahren zum Überwachen der Verbrennung in einer Verbrennungseinrichtung für Gas, insbesondere für Erdgas. Hierbei wird mittels einer ersten Sonde im Abgas das Gas-Luft-Verhältnis messtechnisch erfasst. Vorzugsweise wird der O₂-Gehalt oder der CO₂-Gehalt im Abgas gemessen. Die Messwerte werden einer Auswerteeinheit zugeführt. Bei einer Änderung der Gasbeschaffenheit wird ein dem Brennwert oder der Wobbezahl analoges Korrektursignal mittels einer Korrelation erzeugt.

Die WO 2013/000030 A1 offenbart ein Motorsteuersystem zum Ermitteln der Zusammensetzung des gasförmigen Kraftstoffs, um Schwankungen in der Gaszusammensetzung zu kompensieren. Das Motorsteuersystem umfasst einen Abgassensor, der mit einem Strömungsweg des Abgases in Verbindung steht, um NOₓ-Emissionen und Lambda im Abgas bei typischerweise voller Last zu messen. Ein Motorsteuermodul empfängt eine Angabe der NOₓ-Emissionen und des Lambda-Werts im Abgas von der Abgassonde und greift auf eine geeignete Funktion, eine Nachschlagetabelle oder ein Kennfeld zurück, um die Zusammensetzung des gasförmigen Kraftstoffs anhand der Parameter zu ermitteln, die sich auf die NOₓ-Emissionen und den Lambda-Wert im Abgas beziehen und von der Abgassonde empfangen werden. Die Messung jedes Parameters (NOₓ-Emissionen und Lambda im Abgas) wird dann mit dem jeweiligen zulässigen Bereich für diesen Lastzustand verglichen und der Zündzeitpunkt einer brennbaren Ladung entsprechend angepasst, um einen Ausgleich zu schaffen.

Die DE 10 2004 060 893 A1 offenbart ein Verfahren zur Einstellung eines Zündzeitpunkts bei einem, vorzugsweise mit Biogas betriebenen Otto-Gasmotor. Hierbei wird ein Ist-Wert einer Abgastemperatur eines von dem Otto-Gasmotor bei dessen Betrieb angegebenen Abgases erfasst und der Zündzeitpunkt in Abhängigkeit von dem Ist-Wert der Abgastemperatur eingestellt.

Der Erfindung liegt die Aufgabe zu Grunde, eine alternative und/oder verbesserte Technik zur Ermittlung einer Brenngaszusammensetzung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft ein Verfahren zum Ermitteln einer Brenngaszusammensetzung eines Brenngases hinsichtlich eines Inertgasanteils des Brenngases für eine (z. B. stationäre) Brennkraftmaschine (z. B. Viertakt-Gasbrennstoff-Hubkolben-Brennkraftmaschine). Das Verfahren weist ein Betreiben der Brennkraftmaschine mit dem Brenngas (z. B. zum Halten einer konstanten Stickoxidemission, vorzugsweise Rohstickoxidemission) auf. Das Verfahren weist ein Ermitteln eines Betriebspunkts der Brennkraftmaschine beim Betreiben der Brennkraftmaschine auf (z. B. mittels mindestens eines physischen und/oder virtuellen Sensors). Das Verfahren weist ein Erfassen einer Stickoxidemission, vorzugsweise einer Roh-Stickoxidemission, der Brennkraftmaschine in dem Betriebspunkt auf (z. B. mittels eines Stickoxidsensors und/oder eines virtuellen Sensors). Das Verfahren weist ein Erfassen einer Abgastemperatur der Brennkraftmaschine in dem Betriebspunkt auf (z. B. mittels eines Temperatursensors und/oder eines virtuellen Sensors). Das Verfahren weist ein Erfassen eines Verbrennungsluftverhältnisses der Brennkraftmaschine in dem Betriebspunkt auf (z.B. mittels einer Lambdasonde und/oder eines virtuellen Sensors). Das Verfahren weist ein Ermitteln der Brenngaszusammensetzung des Brenngases basierend auf dem Betriebspunkt, der erfassten Stickoxidemission, der erfassten Abgastemperatur und dem erfassten Verbrennungsluftverhältnis auf, wobei das Ermitteln der Brenngaszusammensetzung ein Ermitteln des Inertgasanteils des Brenngases aufweist.

Vorteilhaft kann das Verfahren ermöglichen, eine Brenngaszusammensetzung ohne aufwendige Zusatzmesstechnik (z. B. Gaschromatograph, Brennraumdrucksensor usw.) zu ermitteln. Stattdessen wurde erkannt, dass eine Ermittlung der Brenngaszusammensetzung des Brenngases nur auf Basis von einfachen Messgrößen (Stickoxidemission, Abgastemperatur, Verbrennungsluftverhältnisses) möglich ist, die ohnehin in einer Brennkraftmaschine zu anderen Zwecken erfasst und verarbeitet werden können. Jede Brenngaszusammensetzung hat für jeden Betriebspunkt einen "Fingerabdruck" dieser einfachen Messgrößen. Dadurch können sich deutlich verringerte Investitionskosten verglichen mit der aufwendigen Zusatzmesstechnik ergeben. Die Korrelation der Messgrößen zum Ermitteln der Brenngaszusammensetzung kann sich zudem unabhängig vom Motortyp gleich verhalten. Die vorliegende Technik kann somit beispielsweise für sämtliche Viertakt-Brenngas-Brennkraftmaschinen einsetzbar sein, unabhängig vom jeweiligen Betriebs- oder Brennverfahren. Auf Basis der ermittelten Brenngaszusammensetzung können die Motorbetriebsparameter beispielsweise optimal im Hinblick auf Wirkungsgrad, Emissionen und Motorschutz eingestellt werden.

Bevorzugt basiert das Ermitteln der Brenngaszusammensetzung nicht auf einem Messwert eines Gaschromatographs, eines Gasanalysators, eines Brennraumdrucksensors, eines Heizwertsensors und/oder eines Gasdichtesensors.

Weiterhin weist das Ermitteln der Brenngaszusammensetzung das Ermitteln eines Inertgasanteils, vorzugsweise eines Kohlenstoffdioxidgehalts, des Brenngases, und ein Ermitteln eines Kohlenwasserstoffgehalts, vorzugsweise eines Methangehalts und/oder eines Ethangehalts, des Brenngases auf.

In einem weiteren Ausführungsbeispiel weist das Ermitteln des Betriebspunkts mindestens eines auf von Ermitteln eines Zündzeitpunkts der Brennkraftmaschine (z. B. aus Steuerwerten einer Steuereinheit), Ermitteln (z. B Erfassen) einer Drehzahl der Brennkraftmaschine (z. B. mittels eines Drehzahlsensors und/oder eines virtuellen Sensors), und Ermitteln einer Last der Brennkraftmaschine. Vorzugsweise kann der Betriebspunkt als eine Kombination unterschiedlicher Betriebsparameter dargestellt bzw. abgebildet werden.

In einer Weiterbildung basiert das Ermitteln der Last auf einem Erfassen eines Saugrohrdrucks der Brennkraftmaschine (z. B. mittels eines Drucksensors und/oder eines virtuellen Sensors), oder das Ermitteln der Last basiert auf einem Erfassen einer elektrischen Scheinleistung eines von der Brennkraftmaschine angetriebenen Generators (z. B. mittels eines Strom-Spannungsmessers und/oder eines virtuellen Sensors).

In einem weiteren Ausführungsbeispiel weist das Ermitteln des Betriebspunkts ferner ein Erfassen einer Zufuhrtemperatur (z. B. Gemisch-Zufuhrtemperatur, vorzugsweise Verbrennungsluft-Brenngas-Gemischtemperatur oder Verbrennungsluft-Brenngas-Abgas-Gemischtemperatur) und/oder eines Zufuhrdrucks (z. B. Gemisch-Zufuhrdruck, bevorzugt Verbrennungsluft-Brenngas-Gemischdruck oder Verbrennungsluft-Brenngas-Abgas-Gemischdruck), vorzugsweise direkt, stromaufwärts von einem Verdichter eines Turboladers der Brennkraftmaschine auf (z. B. mittels eines Temperatursensors und/oder eines Drucksensors und/oder eines virtuellen Sensors). Damit kann der Betriebspunkt noch präziser dargestellt werden.

In einer Ausführungsform weist das Ermitteln des Betriebspunkts ferner ein Erfassen einer Abgastemperatur und/oder eines Abgasdrucks, vorzugsweise direkt, stromabwärts einer Abgasturbine eines Turboladers der Brennkraftmaschine auf (z. B. mittels eines Abgastemperatursensors und/oder eines Abgasdrucksensors und/oder eines virtuellen Sensors). Vorteilhaft kann der Betriebspunkt so ebenfalls noch genauer abgebildet werden.

In einer weiteren Ausführungsform weist das Ermitteln des Betriebspunkts ferner ein Erfassen von Umgebungsbedingungen, vorzugsweise eines Luftdrucks, einer Luftfeuchtigkeit und/oder eines Taupunkts, auf (z. B. mittels eines Umgebungslufttemperatursensors, eines Umgebungstemperatursensors und/oder eines virtuellen Sensors). Vorteilhaft kann der Betriebspunkt so ebenfalls noch genauer abgebildet werden.

In einer weiteren Ausführungsform weist das Verfahren ferner ein Erfassen einer Gemischtemperatur (z. B. einer Brenngas-Verbrennungsluft-Gemischtemperatur oder einer Brenngas-Verbrennungsluft-Abgas-Gemischtemperatur) stromaufwärts einer Hauptbrennkammer der Brennkraftmaschine, bevorzugt in einer Saugrohrleitung der Brennkraftmaschine, auf. Das Ermitteln der Brenngaszusammensetzung des Brenngases basiert ferner auf der erfassten Gemischtemperatur. Bevorzugt kann die Ermittlung der Brenngaszusammensetzung somit weiter präzisiert werden.

In einer Ausführungsvariante weist das Verfahren ferner ein Erfassen eines Abgasdrucks stromaufwärts einer Abgasturbine eines Turboladers der Brennkraftmaschine auf, wobei das Ermitteln der Brenngaszusammensetzung des Brenngases ferner auf der erfassten Abgastemperatur stromaufwärts der Abgasturbine basiert. Vorteilhaft kann die Ermittlung der Brenngaszusammensetzung somit weiter präzisiert werden.

In einer weiteren Ausführungsvariante weist das Verfahren ferner ein Erfassen von Körperschall aus einer Verbrennung beim Betreiben der Brennkraftmaschine auf, wobei das Ermitteln der Brenngaszusammensetzung des Brenngases ferner auf dem erfassten Körperschall basiert. So kann die Ermittlung der Brenngaszusammensetzung ebenfalls weiter präzisiert werden. Zudem können bspw. eine Serienstreuung und/oder ein Verschleißzustand der Brennkraftmaschine bei der Ermittlung der Brenngaszusammensetzung berücksichtigt werden.

In einem Ausführungsbeispiel erfolgt das Ermitteln der Brenngaszusammensetzung des Brenngases mittels einer vorbestimmten (z. B. simulativ und/oder empirisch ermittelten) Zuordnung (z. B. aufweisend mindestens ein Kennfeld, mindestens eine Tabelle, mindestens einen Algorithmus, mindestens eine Berechnungsvorschrift bzw. -modell usw.), wobei die vorbestimmte Zuordnung vorzugsweise abbildet, dass für einen Motorbetriebspunkt und konstante Rohstickoxidemissionen mit fallendem Verbrennungsluftverhältnis und mit steigender Abgastemperatur ein Inertgasanteil der Brenngaszusammensetzung ansteigt.

Vorzugsweise kann die Zuordnung dem ermittelten Betriebspunkt, den erfassten Stickoxidemissionen, dem erfassten Verbrennungsluftverhältnis und der erfassten Abgastemperatur (und optional weiteren Parametern und/oder Kennwerten) die Brenngaszusammensetzung mittels einer vorbestimmten Korrelation zuordnen.

In einem weiteren Ausführungsbeispiel weist das Verfahren ferner ein Anpassen eines Betriebs der Brennkraftmaschine in Abhängigkeit von der ermittelten Brenngaszusammensetzung auf.

In einer Weiterbildung weist das Anpassen des Betriebs der Brennkraftmaschine ein Anpassen einer Abgasrückführrate in Abhängigkeit von der ermittelten Brenngaszusammensetzung auf, vorzugsweise mit einem Erhöhen der Abgasrückrührrate bei einer Verringerung eines Inertgasanteils der ermittelten Brenngaszusammensetzung.

In einer weiteren Ausführungsvariante weist das Anpassen des Betriebs der Brennkraftmaschine ein Anpassen eines Zündzeitpunkts der Brennkraftmaschine auf.

Ein weiterer Aspekt der vorliegenden Offenbarung betrifft eine (z. B. stationäre) Brennkraftmaschine, aufweisend eine Steuereinheit, die dazu konfiguriert ist, ein Verfahren nach einem der vorherigen Ansprüche auszuführen.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Bevorzugt kann die Brennkraftmaschine jeglichen Sensor zum Erfassen jeglichen Parameters/Kennwerts des hierin offenbarten Verfahrens aufweisen.

Es ist auch möglich, die Vorrichtung wie hierin offenbart für Personenkraftwagen, Nutzfahrzeuge (z. B. Lastkraftwagen oder Omnibusse) Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Brennkraftmaschine;
- Figur 2: eine schematische Darstellung eines Verfahrens zum Ermitteln einer Brenngaszusammensetzung; und
- Figur 3: ein schematisches Inertgasanteil-Lambdawert-Abgastemperatur-Diagramm.

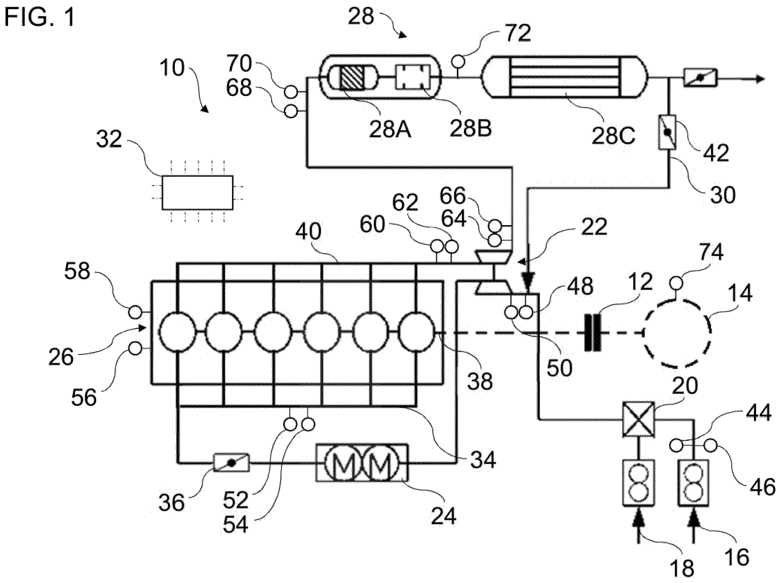

Die Figur 1 zeigt eine Brennkraftmaschine 10. Die Brennkraftmaschine 10 ist als eine Viertakt-Gasbrennstoff-Hubkolben-Brennkraftmaschine zum Verbrennen eines Brenngases ausgeführt. Die Brennkraftmaschine 10 kann in einer mobilen Maschine oder einem Fahrzeug, z. B. zum Antreiben des Fahrzeugs, umfasst sein. Bevorzugt ist das Fahrzeug ein Nutzfahrzeug, z. B. Omnibus oder Lastkraftwagen. Besonders bevorzugt ist die Brennkraftmaschine 10 allerdings eine stationäre Brennkraftmaschine, z. B. in einem Kraftwerk zur Stromerzeugung. Die Brennkraftmaschine 10 kann mittels einer Kupplung 12 mit einem Generator 14 zur Stromerzeugung antreibend verbunden werden.

Die Zuführung des Gasbrennstoffs bzw. Brenngases zur Verbrennung in der Brennkraftmaschine 10 kann mittels jeglicher Technik erfolgen. Beispielsweise kann der Gasbrennstoff direkt in die Verbrennungskammer(n) der Brennkraftmaschine 10 eingeblasen werden. Alternativ kann der Gasbrennstoff bspw. zylinderspezifisch über Dosierventile (z. B. elektromagnetisch betätigte Gaszuführventile - engl. SOGAV - solenoid operated gaseous fuel admission valve) in Einlasskanäle der Zylinderköpfe bzw. des Zylinderkopfes der Brennkraftmaschine 10 eindosiert werden. Alternativ kann das Brenngas auch stromaufwärts des Zylinderkopfes bzw. der Zylinderköpfe mit der Verbrennungsluft gemischt werden, wie nachfolgend anhand der Figur 1 beispielhaft beschrieben ist.

Die Brennkraftmaschine 10 kann eine Verbrennungsluftzufuhr 16, eine Brenngaszufuhr 18, einen Gasmischer 20, mindestens einen Turbolader 22, einen Gemischkühler 24, Hauptbrennkammern 26, eine Abgasnachbehandlung 28 und eine Abgasrückführleitung 30 aufweisen. Die Brennkraftmaschine 10 kann ferner einer Steuereinheit 32 aufweisen.

Verbrennungsluft von der Verbrennungsluftzufuhr 16 und Brenngas von der Brenngaszufuhr 18 werden im Gasmischer 20 zu einem Brenngas-Verbrennungsluft-Gemisch gemischt. Das Brenngas-Verbrennungsluft-Gemisch wird einem Verdichter des Turboladers 22 zugeführt. Der Verdichter des Turboladers 22 verdichtet das Brenngas-Verbrennungsluft-Gemisch und erwärmt es dabei. Der Gemischkühler 24 kühlt das erwärmte Brenngas-Verbrennungsluft-Gemisch ab. Das Gemisch wird über eine Saugrohrleitung 34 der Brennkraftmaschine 10 zu den Hauptbrennkammern 26 zugeführt. Zum Einstellen einer Gemischmenge kann eine Drosselklappe 36 stromaufwärts Hauptbrennkammern 26 verstellt werden.

Es ist möglich, dass Abgas von der Abgasrückführleitung 30 in das Brenngas-Verbrennungsluft-Gemisch gemischt wird, zum Beispiel stromaufwärts oder stromabwärts des Verdichters des Turboladers 22 oder des Gemischkühlers 24.

In den Hauptbrennkammern 26 wird das Gemisch verbrannt. Durch die Verbrennung in den Hauptbrennkammern 26 wird eine Kurbelwelle 38 angetrieben. Die Kurbelwelle 38 treibt beispielsweise Antriebsräder des Fahrzeugs oder den Generator 14 an. Das verbrannte Gemisch wird als Abgas aus den Hauptbrennkammern 26 in eine Abgassammelleitung 40 geleitet.

Die Abgassammelleitung 40 führt das Abgas zu einer Abgasturbine des Turboladers 22. In der Abgasturbine wird das Abgas entspannt, wodurch die Abgasturbine und damit der Verdichter des Turboladers 22 angetrieben werden. Stromabwärts der Abgasturbine des Turboladers 22 wird das Abgas zur Abgasnachbehandlung 28 geleitet. Die Abgasnachbehandlung 28 kann beispielsweise mindestens einen Partikelfilter 28A und/oder Katalysator 28B (z. B. Oxidationskatalysator und/oder SCR-Katalysator) und/oder Wärmetauscher 28C zum Behandeln des Abgases aufweisen. Stromabwärts der Abgasnachbehandlung 28 kann das Abgas in die Atmosphäre abgegeben oder durch die Abgasrückführleitung 30 zur Einlassseite der Brennkraftmaschine 10 rückgeführt werden. Eine rückgeführte Abgasmenge kann beispielsweise mittels einer Drosselklappe 42 in der Abgasrückführleitung 30 eingestellt werden.

Die Steuereinheit 32 ist dazu ausgebildet, einen Betrieb der Brennkraftmaschine 10 zu steuern. Bevorzugt ist die Steuereinheit 32 dazu ausgebildet, ein Verfahren zum Ermitteln einer Brenngaszusammensetzung wie hierin offenbart auszuführen. Die Steuereinheit 32 kann hierzu mit einer Mehrzahl von Sensoren 44 bis 72 verbunden sein. Auch wenn nachfolgend die Sensoren 44 bis 72 in Form von realen Sensoren beschrieben sind, ist es möglich, dass die Sensoren 44 bis 72 zumindest teilweise als virtuelle Sensoren bzw. Softsensoren ausgeführt sind.

Beispielsweise kann die Brennkraftmaschine 10 einen Luftdrucksensor 44 zum Erfassen eines Umgebungsluftdrucks und/oder einen Luftfeuchtigkeitssensor 46 zum Erfassen einer Umgebungsluftfeuchtigkeit aufweisen. Der Luftdrucksensor 44 und der Luftfeuchtigkeitssensor 46 können an der Verbrennungsluftzufuhr 16 angeordnet sein.

Die Brennkraftmaschine 10 kann einen Drucksensor 48 und/oder ein Temperatursensor 50 stromaufwärts des Verdichters des Turboladers 22 aufweisen. Der Drucksensor 48 kann einen Druck des in den Verdichter des Turboladers 22 einströmenden Gemischs erfassen. Der Temperatursensor 50 kann eine Temperatur des in den Verdichter des Turboladers 22 einströmenden Gemischs erfassen. Bevorzugt sind der Drucksensor 48 und der Temperatursensor 50 direkt an einem Verdichtereintritt des Turboladers 22 angeordnet.

Die Brennkraftmaschine 10 kann einen Drucksensor 52 und/oder eine Temperatursensor 54 in der Saugrohrleitung 34 stromabwärts des Verdichters des Turboladers 22 und stromaufwärts der Hauptbrennkammern 26 der Brennkraftmaschine 10 aufweisen. Der Drucksensor 52 kann einen Saugrohrdruck des Gemischs in der Saugrohrleitung 34 erfassen. Der Temperatursensor 54 kann eine Temperatur des Gemischs in der Saugrohrleitung 34 erfassen.

Die Brennkraftmaschine 10 kann mindestens einen Körperschallsensor 56 und/oder einen Drehzahlsensor 58 aufweisen. Der mindestens eine Körperschallsensor 56 kann als ein Klopfsensor zum Erfassen von Klopfschallemissionen während der Verbrennung in den Hauptbrennkammern 26 ausgeführt sein. Der Drehzahlsensor 58 kann zum Erfassen einer Drehzahl der Kurbelwelle 38 ausgeführt sein.

Die Brennkraftmaschine 10 kann einen Drucksensor 60 und/oder einen Temperatursensor 62 aufweisen. Der Drucksensor 60 erfasst einen Abgasdruck. Der Temperatursensor 62 erfasst eine Abgastemperatur. Der Drucksensor 60 und der Temperatursensor 62 sind stromaufwärts von der Abgasturbine des Turboladers 22 angeordnet, z. B. an einem Auslass der Abgassammelleitung 40 oder in der Abgassammelleitung 40.

Die Brennkraftmaschine 10 kann einen Drucksensor 64 und/oder einen Temperatursensor 66 aufweisen. Der Drucksensor 64 erfasst einen Abgasdruck. Der Temperatursensor 66 erfasst eine Abgastemperatur. Der Drucksensor 64 und der Temperatursensor 66 sind stromabwärts von der Abgasturbine des Turboladers 22 angeordnet, z. B. direkt an einem Turbinenaustritt des Turboladers 22.

Die Brennkraftmaschine 10 kann einen Stickoxidsensor68, eine erste Lambdasonde 70 und/oder eine zweite Lambdasonde 72 aufweisen. Der Stickoxidsensor 68 kann einen Stickoxidgehalt, vorzugsweise einen Roh-Stickoxidgehalt, im Abgas erfassen. Die erste und zweite Lambdasonde 70, 72 können ein Verbrennungsluftverhältnis erfassen. Der Stickoxidsensor 68 und die erste Lambdasonde 70 sind stromaufwärts von der Abgasnachbehandlung 28 angeordnet, z. B. stromabwärts von der Abgassammelleitung 40 und/oder der Abgasturbine des Turboladers 22. Die zweite Lambdasonde 72 ist innerhalb oder stromabwärts von der Abgasnachbehandlung 28 angeordnet, z. B. direkt stromabwärts von der Abgasnachbehandlung 28.

Es ist möglich, dass ein Spannungs- und Strommesser 74 zur Ermittlung einer elektrischen Scheinleistung mit dem Generator 14 verbunden ist.

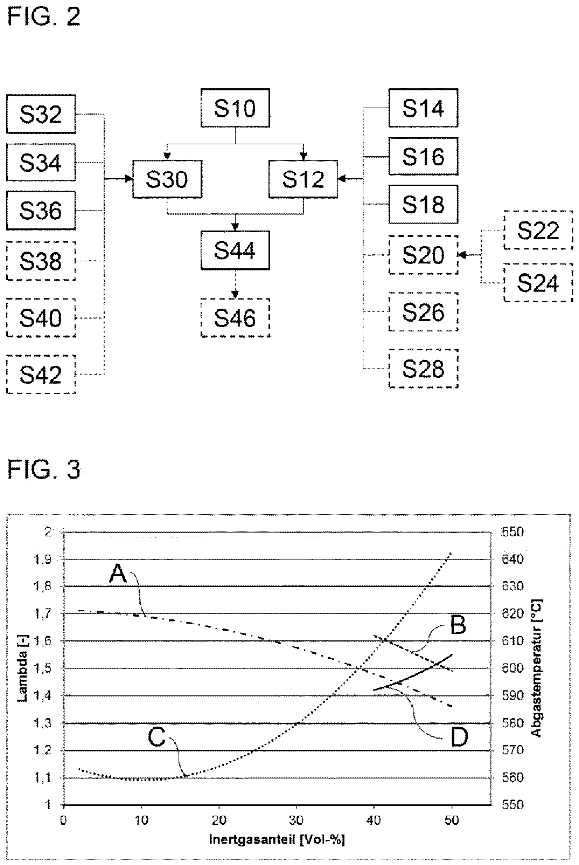

Die Figur 2 zeigt ein beispielhaftes Verfahren zum Ermitteln einer Brenngaszusammensetzung, das unter Bezugnahme auf die Brennkraftmaschine von Figur 1 beispielhaft beschrieben ist.

In einem Schritt S10 wird die Brennkraftmaschine 10 in einem Motorbetriebspunkt betrieben. Prinzipiell kann die Brennkraftmaschine 10 beispielsweise so betrieben werden, dass deren Roh-Stickoxidemissionen, z.B. erfasst von Stickoxidsensor 68, im Wesentlichen konstant gehalten werden.

In einem Schritt S12 wird der Motorbetriebspunkt, in dem die Brennkraftmaschine 10 betrieben wird, ermittelt. Der Motorbetriebspunkt kann als eine Kombination unterschiedlicher Motorparameter abgebildet werden. Der Motorbetriebspunkt wird insbesondere durch eine Motordrehzahl, eine Last und einen Zündzeitpunkt abgebildet bzw. dargestellt. In einem Schritt S14 kann daher die Motordrehzahl mittels des Drehzahlsensors 58 erfasst werden. In einem Schritt S16 kann die Last der Brennkraftmaschine durch den Saugrohrdruck (erfasst mittels des Drucksensors 52) abgebildet werden. Alternativ kann die Last bspw. durch die elektrische Scheinleistung abgebildet werden, die mittels des Spannungs- und Strommessers 74 ermittelbar ist. In einem Schritt S16 kann der Zündzeitpunkt der Brennkraftmaschine 10 ermittelt werden, z. B. aus Steuerdaten zum Ansteuern mindestens einer Zündeinrichtung der Brennkraftmaschine 10. Die Zündeinrichtung kann beispielsweise eine Zündkerze oder eine Corona-Zündeinrichtung o.Ä. sein.

Es ist möglich, dass weitere Bedingungen erfasst bzw. ermittelt werden, um den Motorbetriebspunkt noch genauer abbilden zu können. In einem Schritt S20 können beispielsweise Umgebungsbedingungen erfasst werden. Bevorzugt können in einem Schritt S22 ein Umgebungsluftdruck mittels des Luftdrucksensors 44 und in einem Schritt S24 eine Umgebungsluftfeuchte bzw. ein Taupunkt mittels des Luftfeuchtigkeitssensors 46 erfasst werden. Alternativ oder zusätzlich können in einem Schritt S26 ein Gemischdruck und eine Gemischtemperatur stromaufwärts des Verdichters des Turboladers 22 mittels des Drucksensors 48 und des Temperatursensors 50 erfasst werden. Alternativ oder zusätzlich können in einem Schritt S28 ein Abgasdruck und eine Abgastemperatur stromabwärts der Abgasturbine des Turboladers 22 mittels des Drucksensors 64 und des Temperatursensors 66 erfasst werden.

In einem Schritt S30 können verschiedene Betriebsparameter oder Kennwerte der Brennkraftmaschine 10 erfasst werden. Diese Parameter oder Kennwerte liefern sozusagen einen charakteristischen Fingerabdruck für die Verbrennung des Brenngases der Brennkraftmaschine 10, sodass auf die Brenngaszusammensetzung geschlossen werden kann. In den Schritten S32 bis S36 werden dafür besonders relevante Werte erfasst. Im Schritt S32 wird der Roh-Stickoxidanteil im Abgas mittels des Stickoxidsensors erfasst. Im Schritt S34 wird eine Abgastemperatur des Abgases mittels des Temperatursensors 62 erfasst. Im Schritt S36 wird ein Verbrennungsluftverhältnis mittels der ersten Lambdasonde 70 und/oder der zweiten Lambdasonde 72 erfasst.

Es ist möglich, dass weitere Parameter oder Kennwerte erfasst bzw. ermittelt werden, um den charakteristischen Fingerabdruck für die Verbrennung des Brenngases noch genauer abbilden zu können. Beispielsweise kann in einem Schritt S38 eine Gemischtemperatur in der Saugrohrleitung 34 mittels des Temperatursensors 54 erfasst werden. Alternativ oder zusätzlich kann in einem Schritt S40 ein Abgasdruck stromaufwärts der Abgasturbine des Turboladers 22 mittels des Drucksensors 60 erfasst werden. Alternativ oder zusätzlich kann in einem Schritt S42 ein Körperschall bei der Verbrennung des Brenngases in den Hauptbrennkammern 26 mittels des mindestens einen Körperschallsensors 56 erfasst werden. Das Körperschallsignal kann beispielsweise dazu verwendet werden, um eine Serienstreuung und einen Verschleißzustand der Brennkraftmaschine 10 zu berücksichtigen.

In einem Schritt S44 wird eine Brenngaszusammensetzung des in den Hauptbrennkammern 26 der Brennkraftmaschine 10 verbrannten Brenngases auf Basis einer Korrelation des ermittelten Motorbetriebspunkt mit den erfassten Parametern oder Kennwerten ermittelt. Hierzu kann bspw. ein Rechenmodell, Nachschlagtabellen, Algorithmen, Kennfelder usw. genutzt werden, die simulativ und/oder empirisch ermittelt wurden und vorzugsweise in der Steuereinheit 32 gespeichert sind. Die Ermittlung der Brenngaszusammensetzung kann vorzugsweise hinsichtlich eines Inertgasanteils des Brenngases erfolgen, wie nachfolgend beispielhaft anhand der Figur 3 erläutert ist.

Die Figur 3 zeigt für einen Motorbetriebspunkt und einen Betrieb mit gleichbleibendem Roh-Stickoxidausstoß vier verschiedene Kurven A bis D. Die strichpunktierte Kurve A zeigt einen Lambdawertverlauf in Abhängigkeit vom Inertgasanteil des Brenngases für einen Zündzeitpunkt 25° vor OT (oberem Totpunkt). Die gestrichelte Kurve B zeigt einen Lambdawertverlauf in Abhängigkeit vom Inertgasanteil des Brenngases für einen Zündzeitpunkt 30° vor OT. Die gepunktete Kurve C zeigt einen Abgastemperaturverlauf in Abhängigkeit vom Inertgasanteil des Brenngases für einen Zündzeitpunkt 25° vor OT. Die durchgezogene Kurve D zeigt einen Abgastemperaturverlauf in Abhängigkeit vom Inertgasanteil des Brenngases für einen Zündzeitpunkt 30° vor OT. Im Vergleich der Kurven A bis D erkennt man, dass bei konstantem Roh-Stickoxidausstoß mit zunehmendem Inertgasanteil die Abgastemperatur steigt, wohingegen der Lambdawert bzw. das Verbrennungsluftverhältnis sinkt.

Um die Ermittlung der Brenngaszusammensetzung weiter zu präzisieren, können die mit den Schritten S20-S28 und S38-S42 zusätzlich erfassbaren bzw. ermittelbaren Werte in der Korrelation zur Ermittlung der Brenngaszusammensetzung zusätzlich zumindest teilweise berücksichtigt werden, wenn gewünscht.

Unter erneuter Bezugnahme auf die Figur 2 kann in einem Schritt S46 ein Betrieb der Brennkraftmaschine 10 an die ermittelte Brenngaszusammensetzung angepasst werden, wenn gewünscht. Beispielsweise kann eine rückgeführte Abgasmenge in Abhängigkeit von der Brenngaszusammensetzung angepasst werden. Eine Abgasrückführrate kann beispielsweise umso kleiner eingestellt werden, je größer der ermittelte Inertgasanteil im Brenngas ist. Alternativ oder zusätzlich könnte beispielsweise auch eine Zündung (z. B. ein Zündzeitpunkt und/oder eine Zündenergie) des Gemischs in den Hauptbrennkammern 26 der Brennkraftmaschine 10 angepasst werden.

### Bezugszeichenliste

| | | | |
|---|---|---|---|
| 10 | Brennkraftmaschine | 50 | Temperatursensor |
| 12 | Kupplung | 52 | Drucksensor |
| 14 | Generator | 54 | Temperatursensor |
| 16 | Verbrennungsluftzufuhr | 56 | Körperschallsensor |
| 18 | Brenngaszufuhr | 58 | Drehzahlsensor |
| 20 | Gasmischer | 60 | Drucksensor |
| 22 | Turbolader | 62 | Temperatursensor |
| 24 | Gemischkühler | 64 | Drucksensor |
| 26 | Hauptbrennkammern | 66 | Temperatursensor |
| 28 | Abgasnachbehandlung | 68 | Stickoxidsensor |
| 28A | Partikelfilter | 70 | Erste Lambdasonde |
| 28B | Katalysator | 72 | Zweite Lambdasonde |
| 28C | Wärmetauscher | 74 | Spannungs- und Strommesser |
| 30 | Abgasrückführleitung | S10-S46 | Verfahrensschritte |
| 32 | Steuereinheit | A | Erste Inertgasanteil-Lambda- |
| 34 | Saugrohrleitung | | Kurve |
| 36 | Drosselklappe | B | Zweite Inertgasanteil-Lambda- |
| 38 | Kurbelwelle | | Kurve |
| 40 | Abgassammelleitung | C | Erste Inertgasanteil-Abgastem- |
| 42 | Drosselklappe | | peratur-Kurve |
| 44 | Luftdrucksensor | D | Zweite Inertgasanteil-Abgas- |
| 46 | Luftfeuchtigkeitssensor | | temperatur-Kurve |
| 48 | Drucksensor | | |

## Patentansprüche

1. Verfahren zum Ermitteln einer Brenngaszusammensetzung eines Brenngases hinsichtlich eines Inertgasanteils des Brenngases für eine Brennkraftmaschine (10), aufweisend:
Betreiben der Brennkraftmaschine (10) mit dem Brenngas;
Ermitteln eines Betriebspunkts der Brennkraftmaschine (10) beim Betreiben der Brennkraftmaschine (10);
Erfassen einer Stickoxidemission, vorzugsweise einer Roh-Stickoxidemission, der Brennkraftmaschine (10) in dem Betriebspunkt;
Erfassen einer Abgastemperatur der Brennkraftmaschine (10) in dem Betriebspunkt;
Erfassen eines Verbrennungsluftverhältnisses der Brennkraftmaschine (10) in dem Betriebspunkt;
Ermitteln der Brenngaszusammensetzung des Brenngases basierend auf dem Betriebspunkt, der erfassten Stickoxidemission, der erfassten Abgastemperatur und dem erfassten Verbrennungsluftverhältnis, wobei das Ermitteln der Brenngaszusammensetzung ein Ermitteln des Inertgasanteils des Brenngases aufweist.

2. Verfahren nach Anspruch 1, wobei das Ermitteln der Brenngaszusammensetzung ferner aufweist:
Ermitteln eines Kohlenwasserstoffgehalts, vorzugsweise eines Methangehalts und/oder eines Ethangehalts, des Brenngases.

3. Verfahren nach Anspruch 1 oder Anspruch 2, wobei das Ermitteln des Betriebspunkts mindestens eines aufweist von:
Ermitteln eines Zündzeitpunkts der Brennkraftmaschine (10);
Ermitteln einer Drehzahl der Brennkraftmaschine (10); und
Ermitteln einer Last der Brennkraftmaschine (10).

4. Verfahren nach Anspruch 3, wobei:
das Ermitteln der Last auf einem Erfassen eines Saugrohrdrucks der Brennkraftmaschine (10) basiert; oder
das Ermitteln der Last auf einem Erfassen einer elektrischen Scheinleistung eines von der Brennkraftmaschine (10) angetriebenen Generators (14) basiert.

5. Verfahren nach Anspruch 3 oder Anspruch 4, wobei das Ermitteln des Betriebspunkts ferner aufweist:
Erfassen einer Zufuhrtemperatur und/oder eines Zufuhrdrucks, vorzugsweise direkt, stromaufwärts von einem Verdichter eines Turboladers (22) der Brennkraftmaschine (10).

6. Verfahren nach einem der Ansprüche 3 bis 5, wobei das Ermitteln des Betriebspunkts ferner aufweist:
Erfassen eines Abgasdrucks, vorzugsweise direkt, stromabwärts einer Abgasturbine eines Turboladers (22) der Brennkraftmaschine (10).

7. Verfahren nach einem der Ansprüche 3 bis 6, wobei das Ermitteln des Betriebspunkts ferner aufweist:
Erfassen von Umgebungsbedingungen, vorzugsweise eines Luftdrucks, einer Luftfeuchtigkeit und/oder eines Taupunkts.

8. Verfahren nach einem der vorherigen Ansprüche, ferner aufweisend:
Erfassen einer Gemischtemperatur stromaufwärts einer Hauptbrennkammer der Brennkraftmaschine (10), vorzugsweise in einer Saugrohrleitung (34) der Brennkraftmaschine (10),
wobei das Ermitteln der Brenngaszusammensetzung des Brenngases ferner auf der erfassten Gemischtemperatur basiert.

9. Verfahren nach einem der vorherigen Ansprüche, ferner aufweisend:
Erfassen eines Abgasdrucks stromaufwärts einer Abgasturbine eines Turboladers (22) der Brennkraftmaschine (10),
wobei das Ermitteln der Brenngaszusammensetzung des Brenngases ferner auf dem erfassten Abgasdruck stromaufwärts der Abgasturbine basiert.

10. Verfahren nach einem der vorherigen Ansprüche, ferner aufweisend:
Erfassen von Körperschall aus einer Verbrennung beim Betreiben der Brennkraftmaschine (10),
wobei das Ermitteln der Brenngaszusammensetzung des Brenngases ferner auf dem erfassten Körperschall basiert.

11. Verfahren nach einem der vorherigen Ansprüche, wobei:
das Ermitteln der Brenngaszusammensetzung des Brenngases mittels einer vorbestimmten Zuordnung erfolgt, wobei die vorbestimmte Zuordnung abbildet, dass für einen Motorbetriebspunkt und konstante Roh-Stickoxidemissionen mit fallendem Verbrennungsluftverhältnis und mit steigender Abgastemperatur ein Inertgasanteil der Brenngaszusammensetzung ansteigt.

12. Verfahren nach einem der vorherigen Ansprüche, ferner aufweisend:
Anpassen eines Betriebs der Brennkraftmaschine (10) in Abhängigkeit von der ermittelten Brenngaszusammensetzung.

13. Verfahren nach Anspruch 12, wobei das Anpassen des Betriebs der Brennkraftmaschine (10) aufweist:
Anpassen einer Abgasrückführrate in Abhängigkeit von der ermittelten Brenngaszusammensetzung, vorzugsweise mit einem Erhöhen der Abgasrückrührrate bei einer Verringerung eines Inertgasanteils der ermittelten Brenngaszusammensetzung.

14. Verfahren nach Anspruch 12 oder Anspruch 13, wobei das Anpassen des Betriebs der Brennkraftmaschine (10) aufweist:
Anpassen eines Zündzeitpunkts der Brennkraftmaschine (10).

15. Brennkraftmaschine (10), aufweisend:
eine Steuereinheit (32), die dazu konfiguriert ist, ein Verfahren nach einem der vorherigen Ansprüche auszuführen.

## Claims

1. A method for determining a combustion gas composition of a combustion gas with regard to an inert gas proportion of the fuel gas for an internal combustion engine (10), comprising:
operating the internal combustion engine (10) with the combustion gas;
determining an operating point of the internal combustion engine (10) during operation of the internal combustion engine (10);
detecting a nitrogen oxide emission, preferably a crude nitrogen oxide emission, of the internal combustion engine (10) at the operating point;
detecting an exhaust gas temperature of the internal combustion engine (10) at the operating point;
detecting a combustion air ratio of the internal combustion engine (10) at the operating point;
determining the combustion gas composition of the combustion gas based on the operating point, the detected nitrogen oxide emission, the detected exhaust gas temperature and the detected combustion air ratio, wherein the determining the combustion gas composition comprises determining the inert gas proportion of the combustion gas.

2. The method as claimed in claim 1, wherein the determination of the combustion gas composition comprises:
determining a hydrocarbon content, preferably a methane content and/or an ethane content, of the combustion gas.

3. The method as claimed in claim 1 or claim 2, wherein the determining of the operating point comprises at least one of:
determining an ignition time of the internal combustion engine (10);
determining a speed of the internal combustion engine (10); and
determining a load of the internal combustion engine (10).

4. The method as claimed in claim 3, wherein:
the determining of the load is based on detecting of a suction pipe pressure of the internal combustion engine (10); or
the determining of the load is based on detecting of an electrical apparent power of a generator (14) which is driven by the internal combustion engine (10).

5. The method as claimed in claim 3 or claim 4, wherein the determining of the operating point further comprises:
detecting a supply temperature and/or a supply pressure, preferably directly, upstream of a compressor of a turbocharger (22) of the internal combustion engine (10).

6. The method as claimed in one of claims 3 to 5, wherein the determining of the operating point further comprises:
detecting an exhaust gas pressure, preferably directly, downstream of an exhaust gas turbine of a turbocharger (22) of the internal combustion engine (10).

7. The method as claimed in one of claims 3 to 6, wherein the determining of the operating point further comprises:
detecting ambient conditions, preferably an air pressure, an air humidity and/or a dew point.

8. The method as claimed in one of the preceding claims, further comprising:
detecting an admixture temperature upstream of a main combustion chamber of the internal combustion engine (10), preferably in a suction pipeline (34) of the internal combustion engine (10),
wherein the determining of the combustion gas composition of the combustion gas is further based on the detected admixture temperature.

9. The method as claimed in one of the preceding claims, further comprising:
detecting an exhaust gas pressure upstream of an exhaust gas turbine of a turbocharger (22) of the internal combustion engine (10),
wherein the determining of the combustion gas composition of the combustion gas is further based on the detected exhaust gas pressure upstream of the exhaust gas turbine.

10. The method as claimed in one of the preceding claims, further comprising:
detecting structure-borne noise from a combustion during operation of the internal combustion engine (10),
wherein the determining of the combustion gas composition of the combustion gas is further based on the detected structure-borne noise.

11. The method as claimed in one of the preceding claims, wherein:
the determining of the combustion gas composition of the combustion gas is carried out by means of a predetermined association, wherein the predetermined association reflects that, for an engine operating point and constant crude nitrogen oxide emissions with a falling combustion air ratio and increasing exhaust gas temperature, an inert gas proportion of the combustion gas composition increases.

12. The method as claimed in one of the preceding claims, further comprising:
adapting an operation of the internal combustion engine (10) in accordance with the determined combustion gas composition.

13. The method as claimed in claim 12, wherein the adapting of the operation of the internal combustion engine (10) comprises:
adapting an exhaust gas return rate depending on the determined combustion gas composition, preferably with an increase of the exhaust gas return rate with a reduction of an inert gas proportion of the determined combustion gas composition.

14. The method as claimed in claim 12 or claim 13, wherein the adapting of the operation of the internal combustion engine (10) comprises:
adapting an ignition time of the internal combustion engine (10).

15. An internal combustion engine (10) comprising:
a control unit (32) which is configured to carry out a method according to one of the preceding claims.

## Revendications

1. Procédé destiné à déterminer une composition de gaz de combustion d'un gaz de combustion en ce qui concerne une proportion de gaz inerte du gaz de combustion pour un moteur à combustion interne (10), comportant :
fonctionnement du moteur à combustion interne (10) avec le gaz de combustion ;
détermination d'un point de fonctionnement du moteur à combustion interne (10) pendant le fonctionnement du moteur à combustion interne (10) ;
détection d'une émission d'oxyde d'azote, de préférence d'une émission d'oxyde d'azote brut, du moteur à combustion interne (10) au point de fonctionnement ;
détection d'une température des gaz d'échappement du moteur à combustion interne (10) au point de fonctionnement ;
détection d'un rapport d'air de combustion du moteur à combustion interne (10) au point de fonctionnement ;
détermination de la composition de gaz de combustion du gaz de combustion sur la base du point de fonctionnement, de l'émission d'oxyde d'azote détectée, de la température des gaz d'échappement détectée et du rapport d'air de combustion détecté, la détermination de la composition de gaz de combustion comprenant une détermination de la teneur en gaz inerte du gaz de combustion.

2. Procédé selon la revendication 1, la détermination de la composition de gaz de combustion comportant en outre :
détermination d'une teneur en hydrocarbure, de préférence d'une teneur en méthane et/ou d'une teneur en éthane, du gaz de combustion.

3. Procédé selon la revendication 1 ou la revendication 2, la détermination du point de fonctionnement comportant au moins l'un des éléments suivants :
détermination d'un moment d'allumage du moteur à combustion interne (10) ;
détermination d'une vitesse de rotation du moteur à combustion interne (10) ; et
détermination d'une charge du moteur à combustion interne (10).

4. Procédé selon la revendication 3 :
la détermination de la charge étant basée sur la détection d'une pression de tuyau d'aspiration du moteur à combustion interne (10) ; ou
la détermination de la charge étant basée sur une détection d'une puissance apparente électrique d'un générateur (14) entraîné par le moteur à combustion interne (10).

5. Procédé selon la revendication 3 ou la revendication 4, la détermination du point de fonctionnement comportant en outre :
détection d'une température d'alimentation et/ou d'une pression d'alimentation, de préférence directement, en amont d'un compresseur d'un turbocompresseur (22) du moteur à combustion interne (10).

6. Procédé selon l'une des revendications 3 à 5, la détermination du point de fonctionnement comportant en outre :
détection d'une pression de gaz d'échappement, de préférence directement, en aval d'une turbine à gaz d'échappement d'un turbocompresseur (22) du moteur à combustion interne (10).

7. Procédé selon l'une des revendications 3 à 6, la détermination du point de fonctionnement comportant en outre :
détection de conditions ambiantes, de préférence d'une pression d'air, d'une humidité d'air et/ou d'un point de rosée.

8. Procédé selon l'une des revendications précédentes, comportant en outre :
détection d'une température de mélange en amont d'une chambre de combustion principale du moteur à combustion interne (10), de préférence dans une conduite d'aspiration (34) du moteur à combustion interne (10),
la détermination de la composition de gaz de combustion du gaz de combustion étant en outre basée sur la température du mélange détectée.

9. Procédé selon l'une des revendications précédentes, comportant en outre :
détection d'une pression des gaz d'échappement en amont d'une turbine à gaz d'échappement d'un turbocompresseur (22) du moteur à combustion interne (10),
la détermination de la composition de gaz de combustion du gaz de combustion étant en outre basée sur la pression de gaz d'échappement détectée en amont de la turbine à gaz d'échappement.

10. Procédé selon l'une des revendications précédentes, comportant en outre :
détection de bruits de structure provenant d'une combustion lors du fonctionnement du moteur à combustion interne (10),
la détermination de la composition de gaz de combustion du gaz de combustion étant en outre basée sur le bruit de structure détecté.

11. Procédé selon l'une des revendications précédentes :
la composition de gaz de combustion du gaz de combustion étant déterminée au moyen d'une association prédéfinie, l'association prédéfinie indiquant que, pour un point de fonctionnement du moteur et des émissions d'oxydes d'azote bruts constantes, une proportion de gaz inerte de la composition de gaz de combustion augmente avec une diminution du rapport d'air de combustion et avec une augmentation de la température des gaz d'échappement.

12. Procédé selon l'une des revendications précédentes, comportant en outre :
l'adaptation d'un fonctionnement du moteur à combustion interne (10) en fonction de la composition de gaz de combustion déterminée.

13. Procédé selon la revendication 12, l'adaptation du fonctionnement du moteur à combustion interne (10) comportant :
adaptation d'un taux de recirculation des gaz d'échappement en fonction de la composition de gaz de combustion déterminée, de préférence avec une augmentation du taux de recirculation des gaz d'échappement en cas de réduction d'une proportion de gaz inerte de la composition de gaz de combustion déterminée.

14. Procédé selon la revendication 12 ou la revendication 13, l'adaptation du fonctionnement du moteur à combustion interne (10) comportant :
adaptation d'un moment d'allumage du moteur à combustion interne (10).

15. Moteur à combustion interne (10), comportant :
une unité de commande (32) qui est configurée pour exécuter un procédé selon l'une des revendications précédentes.
